# EUROPÄISCHE PATENTSCHRIFT

(11) **EP 4 452 030 B1**
(45) Veröffentlichungstag und Bekanntmachung des Hinweises auf die Patenterteilung: **14.01.2026**
(21) Anmeldenummer: 22854510.9
(22) Anmeldetag: 16.12.2022
(51) Int. Cl.: A47L 1/02

(54) **REINIGUNGSEINRICHTUNG UND VERFAHREN ZUR VERWENDUNG EINER REINIGUNGSEINRICHTUNG**
CLEANING DEVICE AND METHOD OF USING A CLEANING DEVICE
DISPOSITIF DE NETTOYAGE ET PROCÉDÉ D'UTILISATION D'UN DISPOSITIF DE NETTOYAGE

(30) Priorität: 20.12.2021 DE 102021006264; 23.03.2022 DE 102022001005; 11.07.2022 DE 102022002507; 04.08.2022 DE 102022002835
(43) Veröffentlichungstag der Anmeldung: 30.10.2024
(73) Patentinhaber: Lissowski Gebäudereinigung GmbH, 52070 Aachen (DE)
(72) Erfinder: LUDWIGS, Sascha, 52066 Aachen (DE); BÖHME, Uwe, 52072 Aachen (DE)
(74) Vertreter: Castell, Klaus
(86) Internationale Anmeldenummer: PCT/DE2022/000122
(87) Internationale Veröffentlichungsnummer: WO 2023/116958

(56) Entgegenhaltungen:
- BE-A- 895 276
- CN-A- 112 249 316
- CN-A- 112 471 957
- US-A- 5 655 247

## Beschreibung

Die Erfindung betrifft eine Reinigungseinrichtung mit einem Träger, einem Antrieb, einer Halterung und Reinigungselementen.

Zum Reinigen von Gegenständen und Oberflächen sind Schwämme, Bürsten und aufwändigere Geräte bekannt. Außerdem sind unterschiedliche Reinigungseinrichtungen mit einem Antrieb bekannt, der in der Regel Bürsten rotatorisch bewegt, um Oberflächen zu reinigen und durch die Rotationsbewegung Schmutz von der Oberfläche abzunehmen, der dann durch die Zentrifugalkraft sich wieder von der Bürste löst. Eine Reinigungseinrichtung gemäß dem Oberbegriff des Anspruchs 1 ist z.B. aus CN-A-112249316 bekannt.

Die Erfindung betrifft vor allem Reinigungseinrichtungen zum Reinigen von ebenen Oberflächen, wie insbesondere von Glasscheiben oder Fassadenflächen. Insbesondere bei Fassadenflächen entsteht das Problem, dass meist nicht nur die ebene Fläche, sondern auch ein strukturierter Rahmen gereinigt werden sollte. Dadurch entstehen erhöhte Anforderungen an die Ausbildung der Reinigungseinrichtung.

Die erfindungsgemäßen Reinigungseinrichtungen können der manuellen Verwendung dienen, sie können am Boden aufgestellt sein und über Mechaniken bewegt werden. Die Reinigungseinrichtung kann jedoch auch an einem Flugobjekt befestigt sein. Für alle Anwendungen ist es besonders wichtig, dass die Reinigungseinrichtung möglichst leicht gefertigt wird, um deren Positionierung an der zu reinigenden Fläche zu erleichtern.

Der Erfindung liegt ausgehend vom vorbekannten Stand der Technik die Aufgabe zugrunde, eine gattungsmäßige Reinigungseinrichtung weiterzuentwickeln.

Diese Aufgabe wird mit einer Reinigungseinrichtung mit den Merkmalen des Patentanspruchs 1 gelöst. Eine vorteilhafte Verwendung einer Reinigungseinrichtung beschreibt der unabhängige Verfahrensanspruch. Vorteilhafte Weiterbildungen sind Gegenstand der Unteransprüche.

Die erfindungsgemäße Reinigungseinrichtung erlaubt das Verschieben von Reinigungselementen auf einer Längsachse mit einem Antrieb. Die Verwendung mehrerer Reinigungselemente ermöglicht einen modularen Aufbau, das Austauschen von Reinigungselementen und den gleichzeitigen Einsatz der Reinigungselemente. Die Verschiebbarkeit relativ zum Träger ermöglicht ein Wischen, Bürsten oder Reiben an der zu reinigenden Oberfläche, wobei die Reinigungselemente auch unterschiedliche Reinigungsfunktionen übernehmen können. Die Längsachse der Halterung kann durch Streben definiert werden, relativ zu denen die Reinigungselemente mit dem Antrieb bewegbar sind.

Die Reinigungselemente sind somit nicht nur beispielsweise als rotierende Bürste um eine Achse drehbar, sondern sie können darüber hinaus auch relativ zum Träger verschiebbar sein und drittens auch zusammen mit dem Träger relativ zur zu reinigenden Fläche bewegbar sein. In vielen Fällen reicht es aus, wenn die Reinigungselemente nur relativ zum Träger verschiebbar und mit dem Träger bewegbar sind.

Die Reinigungseinrichtung kann als Träger beispielsweise Führungen aufweisen, mit denen die Reinigungselemente relativ zur zu reinigenden Fläche lateral verschiebbar sind. Die Reinigungselemente können aber auch relativ zur Halterung der Reinigungseinrichtung verschiebbar sein und sie können sich soger auch noch selbst bewegen, das heißt beispielsweise rotieren, schwenken oder hin und her bewegen.

Vorteilhaft ist es, wenn die Reinigungselemente mit dem Träger in einer Richtung verschiebbar sind und relativ zum Träger in einer dazu ortogonalen Richtung verschiebbar sind. Dann kann der Träger die Reinigungselemente beispielsweise hoch und runter bewegen, während die Reinigungselemente quer dazu hin und her bewegt werden. Zusätzlich kann vorgesehen sein, dass die Reinigungselemente sich relativ zum Träger und relativ zur Halterung bewegen, um als rotierendes Reinigungselement oder schwenkbares Reinigungselement am Ort der Berührung zwischen dem Reinigungselement und der zu reinigenden Fläche beispielsweise zu bürsten oder zu wischen oder zu sprühen.

Als Träger eignen sich Führungen, wie sie von Jalousien oder Rolläden bekannt sind, und es können auch bereits vorhandene Führungen als Träger verwendet werden. Der Vorteil einer beidseitigen Führung der Halterung liegt darin, dass die Reinigungselemente auf der Halterung immer so angeordnet werden können, dass sie in einer waagrechten Richtung im Gleichgewicht liegt und somit keine oder nur sehr geringe Torsionskräfte insbesondere in einer Richtung Quer zur Längserstreckung des Trägers auf den Träger wirken.

Die Reinigungseinrichtung kann auch so leicht gebaut werden, dass als Träger ein Copter und insbesondere ein Multicopter, eine Drehflügel-Drohne oder ein anderes Fluggerät eingesetzt werden kann. Das Fluggerät, wie insbesondere ein Copter ermöglicht es, die Reinigungseinrichtung an Flächen zu bewegen, die ohne aufwändige Vorrichtungen sonst nicht erreichbar wären. Gerade bei Fassanden sind die Fassadenflächen, wie insbesondere die Fenster im oberen Bereich von Gebäuden häufig schwer zu erreichen und daher wird als Träger ein Copter vorgeschlagen, der die Reinigungselemente und den Antrieb trägt und relativ zur reinigenden Fläche positioniert.

Eine einfache Art und Weise, die Reinigungselemente einzeln oder auch mehrere Reinigungselemente gemeinsam zu bewegen, liegt darin, dass der Antrieb einen Riemen aufweist. Der Riemen kann einen oder mehrere Antriebe mit einem oder mehreren Reinigungselementen verbinden, um die Kraft des Antriebs in eine vorzugsweise lineare Bewegung der Reinigungselemente umzusetzen. An Stelle eines Riemens können beispielsweise auch eine Zahnstange, eine Kette, ein Linearmotor oder eine Spindel eingesetzt werden.

Um die Reinigungselemente an der Halterung zu befestigen, ist es vorteilhaft, wenn die Halterung ein Gestänge aufweist. Dabei kann das Gestänge mehrere parallele Stangen aufweisen, an denen die Reinigungselemente angeordnet sind. Wenn die Stangen der Halterung parallel zur Längsachse der Halterung ausgerichtet sind, ermöglicht dies eine

Bewegung der Reinigungselemente mit dem Antrieb relativ zum Träger längs der parallelen Stangen.

Die Reinigungselemente können an den Stangen entlang gleiten und sie können auch ohne Stangen in Richtung einer Längsachse bewegt werden. Vorteilhaft ist es jedoch, wenn die Reinigungselemente mit Rollen an den Stangen angeordnet sind, damit sie möglichst leicht relativ zu den Stangen bewegt werden können.

Eine ausbalancierte Arbeitsweise wird dadurch erleichtert, dass sich die Längsachse der Halterung beidseitig des Trägers erstreckt. Dies erleichtert es, beidseitig des Trägers Reinigungselemente anzuordnen. Besonders vorteilhaft ist es, wenn die Reinigungselemente so auf der Halterung verschiebbar angeordnet sind, dass sie von einer Seite des Trägers auf dessen andere Seite bewegt werden können. Vorteilhaft ist ein standardisierter Träger, der die Reinigungselemente trägt, und eine lineare Führung. Die Reinigungselemente sind vorzugsweise auf dem standardisierten Träger fest montiert aber über die Lineare Führung bewegbar angeordnet.

Die Reinigungselemente können somit vorzugsweise nicht nur rechts und links vom Träger bewegt werden, sondern auch am Träger vorbei von einer Seite auf die andere Seite bewegt werden. Dies ermöglicht es, eine größere Fläche gleichzeitig zu reinigen, ohne dass Streifen in Übergangsbereichen zwischen zu reinigenden Flächen entstehen. Außerdem kann darauf geachtet werden, dass auch bei der Verwendung der Reinigungseinrichtung in der Regel gleichviele Reinigungselemente rechts und links vom Träger angeordnet sind Die Reinigungselemente können vorzugsweise auf einem standardisierten Träger flexibel angeordnet sein. Der Träger, der aus mehreren und vorzugsweise zwei Trägerelementen bestehen kann, kann in einer Linearführungseinrichtung aufgenommen und dort bewegt werden. Die Bewegung der Träger mit bestückten Reinigungselementen erfolgt dann immer von Anschlag senkrechtes Fensterabdeckprofil bis andere Seite senkrechtes Fensterabdeckprofil. Das heißt, dass bei einer bevorzugten Ausführungsform, die Reinigungselemente waagerecht auf einem Träger bewegt werden und vorzugsweise auch der Träger waagerechte Streben aufweist, die senkrecht zu den Streben bewegt werden können.

Dabei ist es vorteilhaft, wenn die Halterung eine Breite in Richtung ihrer Längsachse aufweist, die größer als 1m ist. Vorteilhaft ist es, wenn die Breite der Halterung größer als 1,3 m und vorzugsweise sogar wenn die Halterung mehr als 1,5 m breit ist. Quer zu ihrer Breite kann die Halterung eine Erstreckung als Höhe von mehr als 50 cm aufweisen, damit mehrere Reinigungselemente in Richtung der Höhe übereinander angeordnet werden können und auch parallel zueinander verschoben werden können.

Die Reinigungselemente können Flüssigkeits- oder Gasdüsen sein, sie können als Wischer mit Dichtlippen oder als polierende Polsterflächen ausgebildet sein und vorzugsweise weisen zumindest einige der Reinigungselemente eine Bürste auf. Beispielsweise können als Bürsten zwei oder mehrere Spiralbürsten vorgesehen sein. Diese vorzugsweise rotatorisch gelagerten und angetriebenen Bürsten können auch gegenläufig gedreht werden. Diese Bürste ist vorzugsweise nicht als rotierende Bürste ausgebildet, sondern die Bürste weist eine Vorderseite mit Borsten auf, an der die Borsten nicht als Walze, sondern als Borstenfläche angeordnet sind. Wichtig ist, dass aus Gewichtsgründen möglichst der größere Teil der Bürste oder der Borsten ständig im Eingriff mit der zu reinigenden Fläche sein sollte. Dabei kommt es nicht drauf an, ob die durch die Borsten gebildete Oberfläche der Bürste rund oder plan ist. Vorzugsweise weist die Bürste auch Rollen auf, mit denen Sie relativ zum Träger bewegbar ist.

Um die zu reinigende Fläche mit Wasser, destilliertem Wasser, Reinwasser und/oder einem Reinigungsmittel. zu benetzen, wird vorgeschlagen, dass mindestens ein Reinigungselement der Reinigungseinrichtung eine Reinigungsmittelabgabeeinrichtung aufweist. Vorteilhaft ist eine Reinigungstechnik mittels Reinwasser, da Reinigungsmittel zu eine unerwünschten Schaumbildung führen können. Diese Reinigungsmittelabgabeeinrichtung weist vorzugsweise eine von der Rückseite her beaufschlagte Bürste oder eine Düse auf, die es erlaubt, das Reinigungsmittel möglichst flächig auf die zu reinigende Fläche zu verteilen. Zur Selbstreinigung der Bürstenelemente wird vorgeschlagen, dass sie von hinten nach vorne mit Reinwasser beaufschlagt werden.

Das Reinigungswasser kann, insbesondere wenn entmineralisiertes Wasserverwendet wird, auch einfach nach unten weglaufen. Vorteilhaft ist es, wenn die zu reinigende Fläche vonoben nach unten gereinigt wird, da dann das herablaufende Reinigungswasser noch nicht gereinigte Flächen benetzen kann oder sogar Schmutz abspülen kann.

Um Reinwasser zu sparen und um möglichst wenig Reinigungsmittel in die Umwelt gelangen zu lassen, wird vorgeschlagen, dass mindestens ein Reinigungselement eine Reinigungsmittelaufnahmeeinrichtung aufweist. Die Reinigungsmittelaufnahmeeinrichtung kann eine Saugeinrichtung aufweisen. Eine derartige Saugenrichtung kann auch derart ausgebildet sein, dass mit ihr die Reinigungseinrichtung an der zu reinigenden Fläche gehalten wird oder dass mit ihr die Positionierung relativ zu der zur reinigenden Fläche erleichtert wird. So kann sich die gesamte Reinigungseinrichtung mit der Saugeinrichtung an der zu reinigenden Fläche festhalten oder es kann auch nur eine Positionierung der Reinigungseinrichtung relativ zur reinigenden Fläche durch die Saugeinrichtung erleichtert werden. Vorzugsweise liegt die Saugwirkung der Saugeinrichtung bei 50 bis 100 mbar, was zu einer entsprechenden Anpresskraft führt.

Der Träger und insbesondere der Copter kann durch unterschiedliche Energieträger positioniert und bewegt werden. Und auch für den Antrieb für die Bewegung der Reinigungselemente wird ein Energieträger benötigt. Daher wird vorgeschlagen, dass der Träger einen Wasserstoffantrieb, insbesondere eine Brennstoffzelle aufweist. Dies ermöglicht es, die notwendige Energie für die Positionierung der Reinigungseinrichtung relativ zu der zu reinigenden Fläche und/oder den Antrieb zur Bewegung der Reinigungselemente mit Energie zu versorgen.

Da ein Wasserstoffantrieb in der Regel Wasser erzeugt, wird vorgeschlagen, zumindest einen Teil dieses Wassers für die Reinigung zu verwenden.

Für die Verwendung einer Reinigungseinrichtung und insbesondere der beschriebenen Reinigungseinrichtung wird vorgeschlagen, dass die Reinigungselemente auf einer Achse oder parallel zueinander angeordneten Achsen, vorzugsweise in entgegengesetzten Richtungen, bewegt werden. Die Reinigungseinrichtung kann dabei beispielsweise vor einer Fensterscheibe positioniert werden und die Reinigungselemente können auf einer waagerechten Linie hin und her verschoben werden, um dabei die Fensterfläche oder eine andere zu reinigende Oberfläche mit Reinigungsmitteln zu benetzen und/oder zu reinigen. Dabei ist es vorteilhaft, wenn die Reinigungselemente in einem begrenzten Bereich aneinander vorbei bewegt werden können. Beispielsweise können übereinander angeordnete Reinigungselemente in entgegengesetzte Richtung bewegt werden und auch aneinander vorbei bewegt werden, um auf einer Breite, die vorzugsweise der Fensterbreite entspricht, das Fenster so zu reinigen, dass keine senkrechten Streifen verbleiben.

Die Reinigungselemente können auch gemeinsam quer zu der Achse verschoben werden. Wenn diese Achse beispielsweise eine waagerechte Achse ist und die Reinigungselemente auf dieser waagerechten Achse hin und her verschoben werden, ist es vorteilhaft, wenn die gesamte Reinigungseinrichtung senkrecht bewegt wird, um mit ihr auch eine Scheibe reinigen zu können, die höher ist als die Reinigungseinrichtung. Dabei ist es vorteilhaft, wenn die Reinigungseinrichtung von oben nach unten an der zu reinigenden Fläche entlang geschoben wird, während die Reinigungselemente waagerecht hin und her verschoben werden. Dies ermöglicht es, eine senkrechte zu reinigende Fläche, wie insbesondere ein Fenster oder eine Fassadenfläche vorzugsweise auch inklusive der Rahmen, schnell und einfach zu reinigen.

Die Unteransprüche und die Beschreibung zeigen vorteilhafte Merkmale, die auch unabhängig von den in den unabhängigen Ansprüchen angegebenen Merkmalen erfindungswesentlich sind.

Vorteilhafte Ausführungsbeispiele sind in der Zeichnung dargestellt. Diese Ausführungsbeispiele sind nur zur Erläuterung des Prinzips und die Erfindung erstreckt sich darüber hinaus auf unterschiedliche Ausführungsarten, die der Fachmann der Beschreibung und den Patentansprüchen entnimmt.

Das Ausführungsbeispiel zeigt eine Reinigungsvorrichtung, die insbesondere zur Reinigung von Gebäuden, vorzugsweise deren Glasfassaden, insbesondere Vorhangglasfassaden eingesetzt werden kann. Dieser Fassadentyp zeichnet sich durch einen hohen Glas Oberflächenanteil, gebildet aus standardisierten mehrschichtigen Glaselementen, aus. Zum Halten und Abdichten dieser Glaselemente werden Rahmenelemente an der Gebäudestruktur befestigt. Die Glaselemente werden mit Dichtungen positioniert und durch senkrechte und horizontale Befestigungsleisten und Abdeckleisten an Position gehalten.

Durch Umwelteinflüsse und Witterung werden die Glaselemente sowie Befestigungsleisten und Abdeckleisten verunreinigt. Die Reinigungsvorrichtung kann für sehr unterschiedliche Reinigungsaufgaben eingesetzt werden. Ein bevorzugtes Einsatzgebiet ist, diese anhaftenden Verunreinigungen von allen die Außenseite bildenden Fassadenteilen zu entfernen. Die dann von der Reinigungsvorrichtung zu reinigende Oberfläche wird aus der Oberfläche der Glaselemente und den Oberflächen der senkrechten und horizontalen Abdeckleisten gebildet. Die Reinigungsvorrichtung kann so gestaltet sein, dass es möglich ist, alle diese Oberflächen und gebildeten Kanten in einem Arbeitsgang zu reinigen.

Die Reinigungsvorrichtung kann dazu mindestens eine, vorzugsweise mindestens zwei angetriebene standardisierte Trägereinrichtungen mit Platz für die Anordnung einzelner oder mehrfach kombinierbarer Reinigungselemente einsetzen. Die Reinigungselemente sind vorzugsweise Bürsten oder andere geeignete Vorrichtungen. Der Antrieb der standardisierten Trägereinrichtungen erlaubt eine lineare und voneinander unabhängige Bewegung der Reinigungselemente über die zu reinigende Oberfläche. Die lineare Bewegung wird vorzugsweise quer oder im Winkel zur Bewegungsrichtung der Gesamtvorrichtung über den zu reinigenden Fassadenteil ausgeführt.

Vorzugsweise werden mindestens zwei Trägereinrichtungen identisch mit Reinigungselementen bestückt und in entgegengesetzter Richtung linear über die zu reinigenden Oberflächen bewegt. Dies erlaubt im Idealfall einen Kräfteausgleich der entstehenden Reibkräfte gebildet aus linearer Antriebskraft und Reibkraft auf der Oberfläche. Diese Minderung oder im Ideal Neutralisation der Reibkräfte ist insbesondere für das Führen der Gesamtvorrichtung über die Fassade von Vorteil - insbesondere wenn die gesamte Reinigungsvorrichtung durch eine mit Drehflügeln angetriebene Drohne oder ein anderes Fluggerät getragen werden soll. Solche Fluggeräte reagieren sehr empfindlich auf eingeleitete Kräfte und verändern durch diese Kräfte sofort ihre vorgesehene Fluglage.

Reinigungselemente wie Bürsten oder Schwämme werden vorzugsweise mit einem Reinigungsmedium beaufschlagt. Das Reinigungsmedium ist vorzugsweise Reinwasser oder destilliertes Wasser, damit es keine Beimengungen enthält, die beim Abtrocknen Rückstände auf der zu reinigenden Fläche, wie insbesondere einer Glasscheibe oder anderen Elementen einer Fassade hinterlassen würden. Besonders vorteilhaft ist es, wenn die Reinigungselemente wie insbesondere Bürsten mit einer ausreichenden Menge an Reinigungsmedium gespült werden und mit diesem Reinigungsmedium alle entfernten Verunreinigungen abgeführt werden. Der Fachmann bezeichnet dies als eine Reinigung mit Reinwasser. Ein besonderer Vorteil dieser Arbeitsweise ist, dass die restliche Reinigungsmittelmenge, die auf der zu reinigenden Oberfläche verbleibt, keine Rückstände mehr aufweist, die beim Abtrochnen eine Verschmutzung der Oberfläche bewirken könnten.

Die Menge des für das Spülen notwendigen Reinigungsmittels kann komplett über die mechanischen Reinigungselemente wie Bürsten oder Schwämme aufgebracht werden. Eine andere Möglichkeit ist das Spülen mit einer Düse. Diese muss jedoch eine hohe Spülmenge und/oder Spülgeschwindigkeit aufweisen, um einen guten Effekt zu erzielen. Daher wird die Menge an Reinigungsmeduim bevorzugt über eine Bürste zugeführt, damit die Borsten der Bürste eine mechanische Unterstützung beim Abtransport der Verunreinigungen ermöglichen.

Vorteilhaft ist es, wenn die gesamte Reinigungseinrichtung möglichst leicht ist. Das kann erreicht werden, indem mit ihr nur wenig Reinigungsmittel transportiert wird. Die begrenzt aber die zu reinigende Fläche. Vorteilhaft ist es daher, wenn mit der Reinigungsmittelabgabeeinrichtung Reinigungsmittel gepulst abgegeben wird. Außerdem kann die Reinigungsmittelabgabeeinrichtung einen Tank aus einem Folienmaterial aufweisen, der besonders leicht ist. Dies kann durch einen Tank aus Kunststoff erreicht werden. Vorzugsweise ist das Folienmaterial aus einer so dünnen Folie, dass der Tank nicht eigenstabil ist und beim Abgeben von Reinigungsmittel kollabiert. Dieser Tank kann in einem Gestell gehalten werden, das die Reinigungseinrichtung hält. Die verwendeten konstruktiven Bauteile werden vorzugsweise aus Lochmaterialien oder als Streben/Fachwerkkonstruktion gefertigt. Die Finiteelementemethode erleichtert es, den Materialbedarf zu minimieren, um auch das Gewicht zu reduzieren.

Ein bevorzugtes Ausführungsbeispiel einer erfindungsgemäßen Reinigungseinrichtung ist in der Zeichnung dargestellt und wird im Folgenden näher erläutert. Es zeigt
- Figur 1: eine Reinigungseinrichtung mit einer Halterung mit Reinigungselementen und einem Copter als Träger,
- Figur 2: eine Seitensicht der in Figur 1 gezeigten Reinigungseinrichtung,

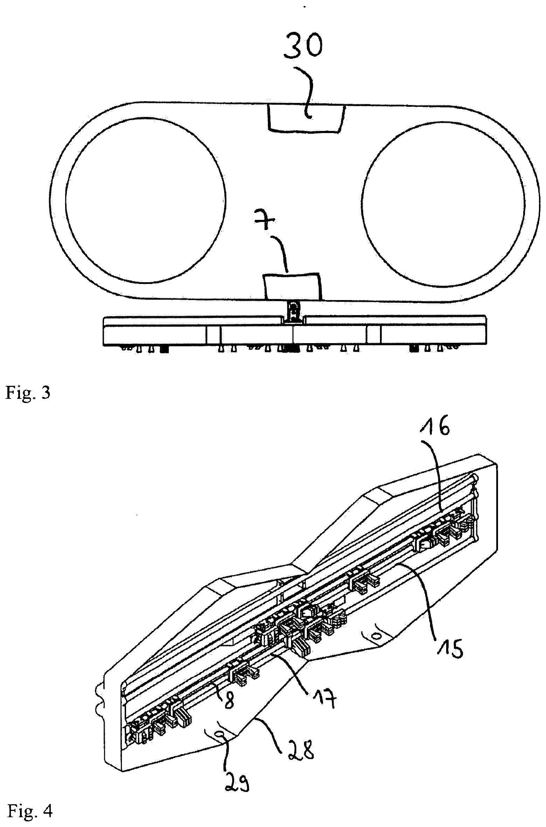

- Figur 3: eine Draufsicht auf die in Figur 1 gezeigte Reinigungseinrichtung,
- Figur 4: eine vergrößerte Darstellung der in Figur 1 gezeigten Halterung mit den Reinigungselementen,

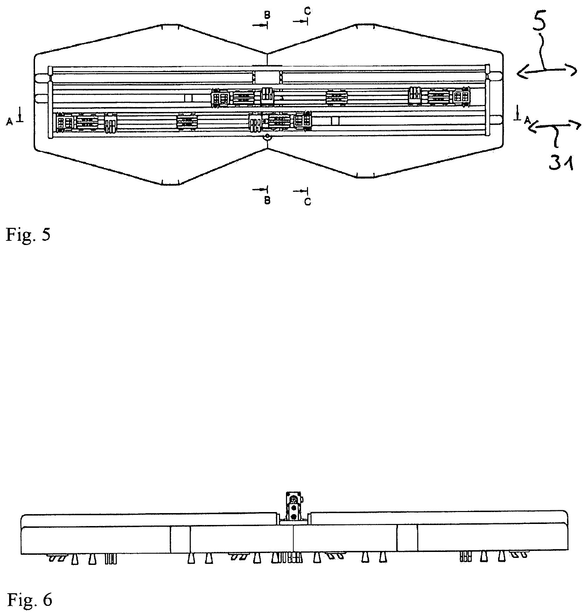

- Figur 5: eine Vorderansicht der in Figur 4 gezeigten Halterung,
- Figur 6: eine Draufsicht der in den Figuren 4 und 5 gezeigten Halterung,
- Figur 7: eine vergrößerte Ansicht der in Figur 4 gezeigten Halterung mit den Reinigungselementen,
- Figur 8: eine vergrößerte Darstellung der in Figur 7 gezeigten Reinigungselemente als Ausschnitt,

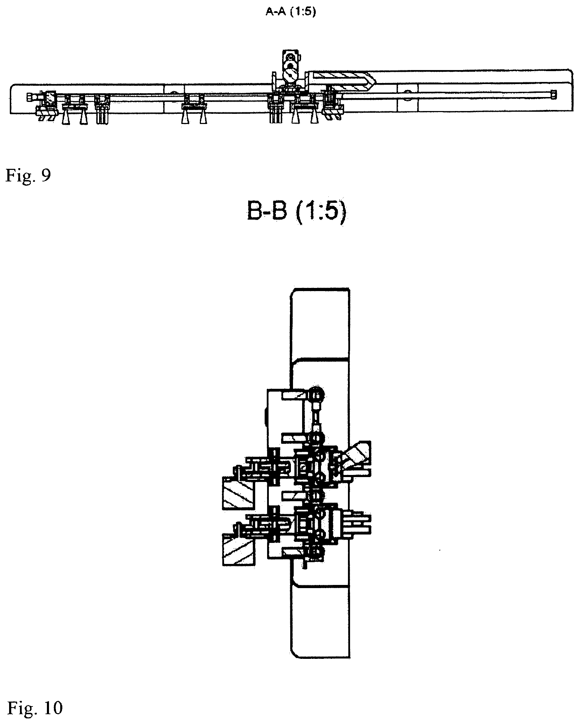

- Figur 9: einen Schnitt längs der Linie AA in Figur 5,
- Figur 10: einen Schnitt längs der Linie BB in Figur 5,

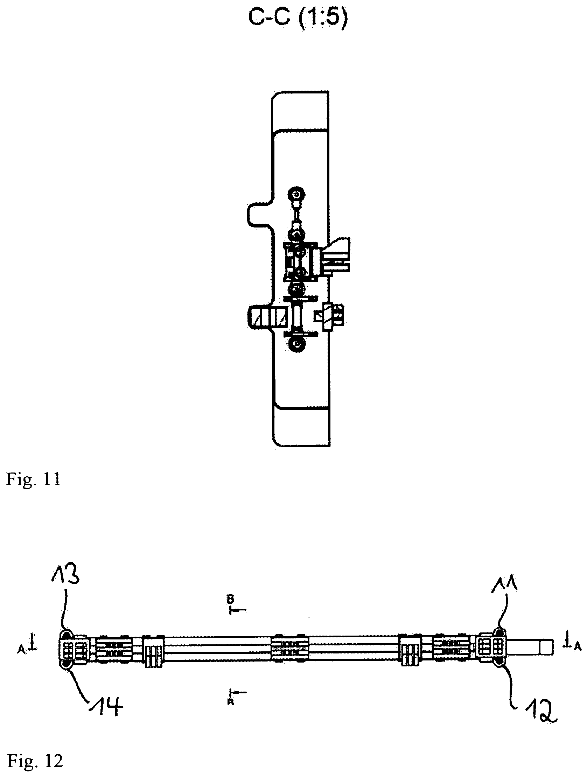

- Figur 11: einen Schnitt längs der Linie CC in Figur 5,
- Figur 12: eine Seitenansicht auf die in Figur 7 gezeigte Halterung,

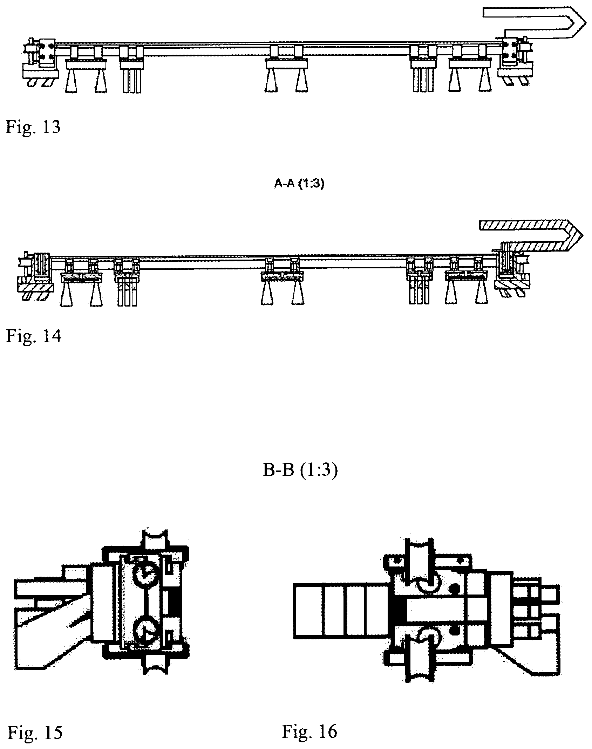

- Figur 13: eine Draufsicht auf die in Figur 7 gezeigte Halterung,
- Figur 14: einen Schnitt längs der Linie AA in Figur 12,
- Figur 15: einen Schnitt längs der Linie BB in Figur 12 ,
- Figur 16: eine Seitenansicht auf die in Figur 12 gezeigte Halterung und

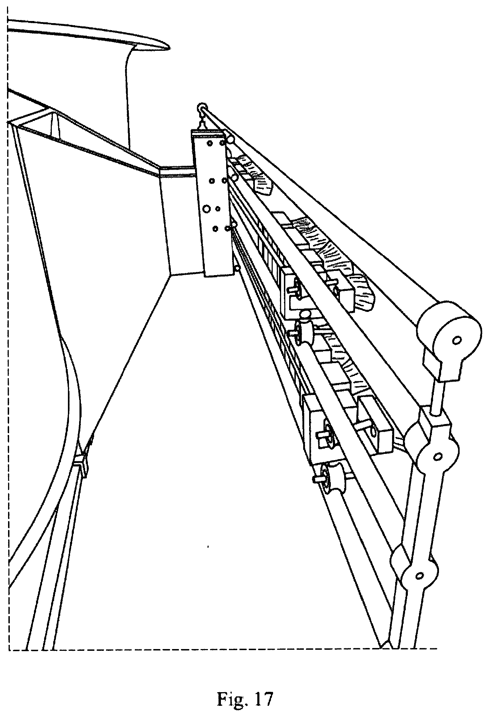

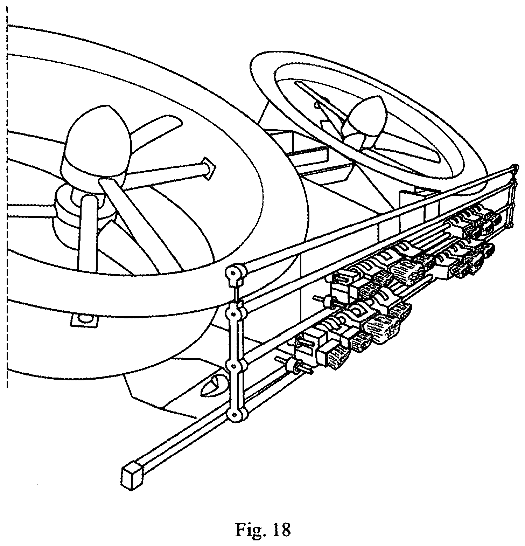

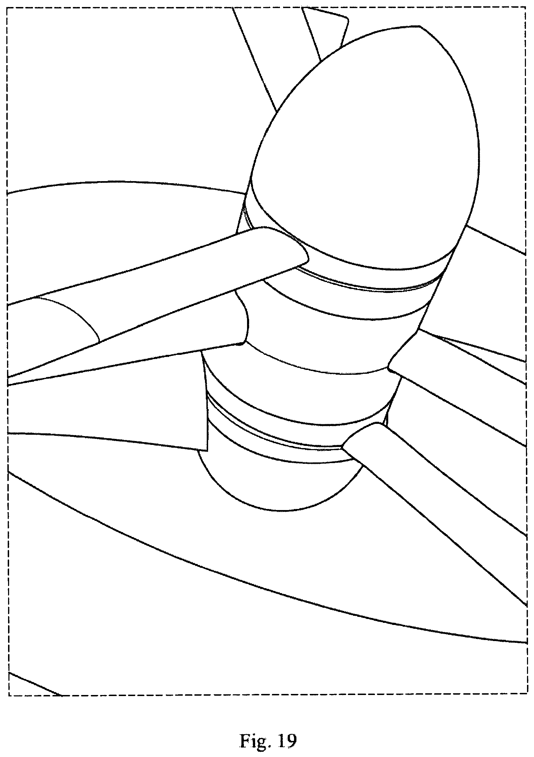

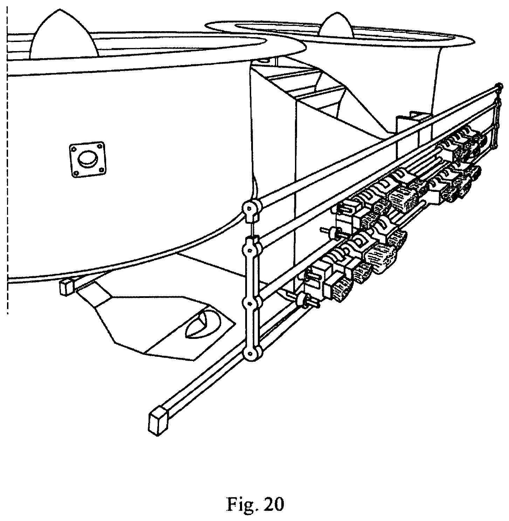

- Figuren 17 bis 20: Bilder eines Prototypen.

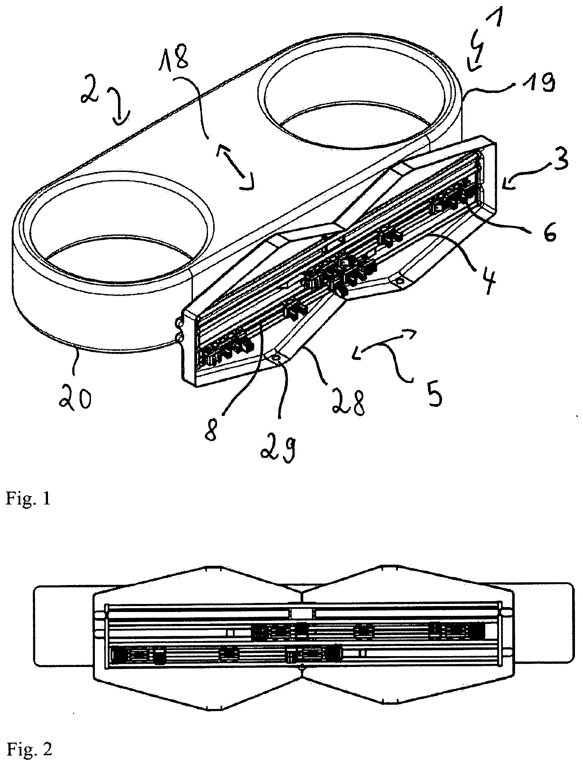

Die in Figur 1 gezeigte Reinigungseinrichtung besteht im Wesentlichen aus dem Träger 2, der im vorliegenden Ausführungsbeispiel als Copter ausgebildet ist, und einer Halterung 3. Der als Copter ausgebildete Träger 2 ist nur grafisch vereinfacht ohne Rotoren dargestellt. Die Halterung 3 hat ein Gestänge 4, das eine Längsachse 5 definiert. An dem Gestänge 4 der Halterung 3 sind Reinigungselemente 6 (nur exemplarisch beziffert) angeordnet. Ein Antrieb 7 ermöglicht es, über einen Riemen 8 die Reinigungselemente 6 längs der Halterung 3 auf deren Längsachse 5 relativ zum Träger 2 zu verschieben.

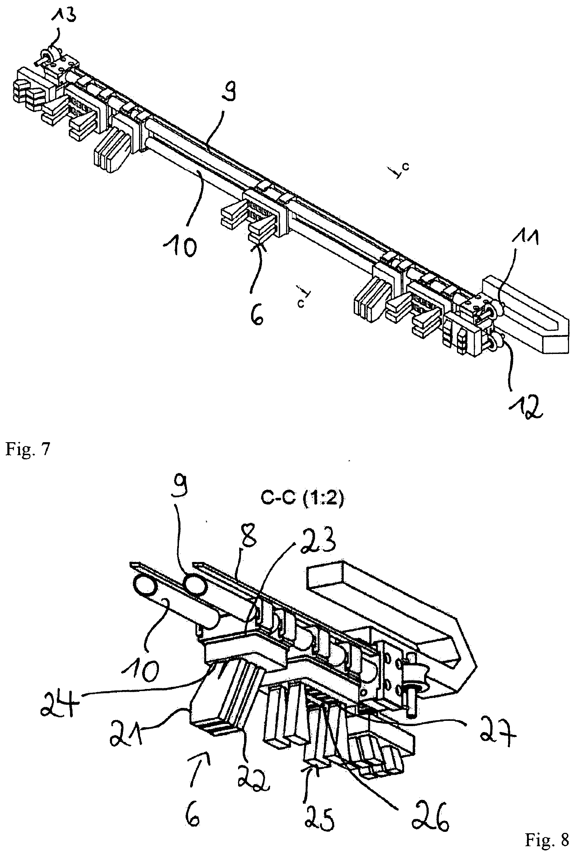

Wie in den Figuren 7 und 8 gezeigt, weist das Gestänge 4 der Halterung 3 mehrere parallele Stangen 9 und 10 auf, an denen die Reinigungselemente 6 befestigt sind. Über Rollen 11, 12, 13 und 14 sind die Reinigungselemente 6 zusammen mit den Stangen 9, 10 an weiteren parallelen Stangen 15 und 16 beziehungsweise 15 und 17 geführt in Richtung der Längsachse 5 beweglich angeordnet.

Für den Gewichtsausgleich erstreckt sich die Längsachse 5 der Halterung 3 beidseitig des Trägers 2, so dass die Halterung 3 möglichst kein Drehmoment um eine Achse 18 auf den Träger 2 ausübt. Auch die beidseitig des Trägers 2 angeordneten Reinigungselemente 6 sorgen dafür, dass das Drehmoment um die Achse 18 gering gehalten wird.

Die Reinigungselemente 6 können auf der Halterung aufeinander zu und wieder von einander weg bewegt werden, so dass das Gewicht der Reinigungselemente relativ zur Achse 18 ausgeglichen ist. Je nach Anwendungsfall können die Reinigungselemente auch auf der Halterung verschiebbar von einer Seite 19 des Trägers 2 zu dessen anderen Seite 20 angeordnet sein, wobei vorzugsweise immer darauf geachtet wird, dass die Verteilung der Reinigungselemente auf der Längsachse 5 so austariert wird, dass sich das auf die Achse 18 wirkende Drehmoment ausgleicht, so dass keine Torsionskraft um die Achse 18 auf den Träger 2 wirkt.

Die Figuren 7 und 8 zeigen auch, dass ein Reinigungselement 6 als Bürste 21 mit Borsten 22 ausgebildet sein kann. Die Bürste 21 hat eine Rückseite 23, mit der sie an den Stangen 9 und 10 befestigt ist, und eine Vorderseite 24, an der die Borsten 22 angeordnet sind. Das neben dem Reinigungselement 6 angeordnete Reinigungselement 25 weist eine Reinigungsmittelabgabeeinrichtung 26 auf, die wiederum eine Düse 27 aufweist.

Im vorliegenden Fall weist nicht das Reinigungselement 6 oder 25 die Reinigungsmittelaufnahmeeinrichtung auf, sondern die Halterung 3 hat einen Rahmen 28 der als Reinigungsmittelaufnahmeeinrichtung dient, da durch die Düse 27 auf die zu reinigende Fläche (nicht gezeigt) gesprühtes Reinigungsmittel an den Rahmen 28 zurückspritzt und von ihm zu einem Auslass 29 geführt wird. Der Auslass 29 steht über einen Schlauch (nicht gezeigt) mit einer Saugeinrichtung (nicht gezeigt) in Verbindung.

Der Träger 2 weist einen Wasserstoffantrieb 30 auf, der je nach Anwendungsfall auch das über die Reinigungsmittelaufnahmeeinrichtung 28 zurückgeführte Reinigungsmittel nutzen kann. Außerdem kann das über die Reinigungsmittelaufnahmeeinrichtung 28 zurückgeführte Reinigungsmitttel auch über Düsen zur Vorreinigung wieder auf die zu reinigende Fläche aufgebracht werden.

Damit die Reinigungseinrichtung möglichst in der Waage gehalten wird und keine Torsionskräfte auf einen Träger ausüben, werden die Reinigungselemente 6 auf der Längsachse 5 oder parallel zueinander angeordneten Achsen 5 und 31 in entgegengesetzter Richtung bewegt. Dadurch kann das durch die Reinigungselemente ausgeübte Drehmoment um eine mittlere Achse 8 minimiert werden.

Außerdem können die Reinigungselemente 6 auch in einem begrenzten Bereich aneinander vorbei bewegt werden, um die Reinigungselemente optimal für den Reinigungszweck zu nutzen.

Um größere Flächen zu reinigen, ist es vorteilhaft, wenn die Reinigungselemente 6 gemeinsam quer zu der Achse 5 oder den Achsen 5 und 31 durch einen Träger wie insbesondere eine Führung oder einen Copter verschoben werden.

Ein Prototyp mit sämtlichen Funktionen zeigen die Bilder 17 bis 20. Hier werden gegenläufig drehende Propeller eingesetzt, die in einem Zylinder angeordnet sind, unterschiedliche Bürsten sind auch farblich unterschiedlich und die Bilder zeigen die Proportionen der einzelnen Elemente.

## Patentansprüche

1. Reinigungseinrichtung (1) mit einem Träger (2), einem Antrieb (7), einer Halterung (3) und Reinigungselementen, die Halterung (3) eine Längsachse (5) aufweist, auf der die Reinigungselemente (6) mit dem Antrieb (7) relativ zum Träger (2) verschiebbar angeordnet sind ***dadurch gekennzeichnet, dass*** die Reinigungselemente (6) auf der Längsachse (5) oder paralell zueinander angeordneten Achsen (5, 31) derart in entgegengesetzten Richtungen bewegt werden können, dass dadurch ein durch die Reinigungselemente um eine mittlere Achse (18) ausgeübtes Drehmoment minimiert wird.

2. Reinigungseinrichtung nach Anspruch *1, **dadurch gekennzeichnet, dass*** der Träger (2) eine Führung ist.

3. Reinigungseinrichtung nach Anspruch 1, ***dadurch gekennzeichnet, dass*** der Träger (2) ein Copter, insbesondere ein Multicopter ist.

4. Reinigungseinrichtung nach einem der vorhergehenden Ansprüche, ***dadurch gekennzeichnet, dass*** der Antrieb (7) einen Riemen (8) aufweist.

5. Reinigungseinrichtung nach einem der vorhergehenden Ansprüche, ***dadurch gekennzeichnet, dass*** die Halterung (3) ein Gestänge (4) aufweist.

6. Reinigungseinrichtung nach Anspruch 5, ***dadurch gekennzeichnet, dass*** das Gestänge (4) mehrere parallele Stangen (9, 10) aufweist, an denen die Reinigungselemente (6) angeordnet sind.

7. Reinigungseinrichtung nach Anspruch 6, ***dadurch gekennzeichnet, dass*** die Reinigungselemente (6) mit den Stangen (9, 10) mit Rollen (11 bis 14) geführt angeordnet sind.

8. Reinigungseinrichtung nach einem der vorhergehenden Ansprüche, ***dadurch gekennzeichnet, dass*** sich die Längsachse (5) der Halterung (3) beidseitig des Trägers (2) erstreckt.

9. Reinigungseinrichtung nach einem der vorhergehenden Ansprüche, ***dadurch gekennzeichnet, dass*** beidseitig des Trägers (2) Reinigungselemente (6) angeordnet sind.

10. Reinigungseinrichtung nach Anspruch 8 oder 9, ***dadurch gekennzeichnet, dass*** Reinigungselemente (6) auf der Halterung (3) verschiebbar von einer Seite (19) des Trägers (2) auf dessen andere Seite (20) angeordnet sind.

11. Reinigungseinrichtung nach einem der vorhergehenden Ansprüche, ***dadurch gekennzeichnet, dass*** mindestens ein Reinigungselement (6) eine Bürste (21) aufweist.

12. Reinigungseinrichtung nach Anspruch 11, ***dadurch gekennzeichnet, dass*** die Bürste (21) eine Vorderseite (24) mit Borsten (22) aufweist.

13. Reinigungseinrichtung nach einem der vorhergehenden Ansprüche, ***dadurch gekennzeichnet, dass*** mindestens ein Reinigungselement (6, 25) eine Reinigungsmittelabgabeeinrichtung (26) aufweist.

14. Reinigungseinrichtung nach Anspruch 13, ***dadurch gekennzeichnet, dass*** die Reinigungsmittelabgabeeinrichtung (26) eine Düse (27) aufweist.

15. Reinigungseinrichtung nach einem der vorhergehenden Ansprüche, ***dadurch gekennzeichnet, dass*** die Halterung (3) oder mindestens ein Reinigungselement (6) eine Reinigungsmittelaufnahmeeinrichtung (28) aufweist.

16. Reinigungseinrichtung nach Anspruch 15, ***dadurch gekennzeichnet, dass*** die Reinigungsmittelaufnahmeeinrichtung (28) eine Saugeinrichtung aufweist.

17. Reinigungseinrichtung nach einem der vorhergehenden Ansprüche, ***dadurch gekennzeichnet, dass*** der Träger (2) einen Wasserstoffantrieb (30), insbesondere eine Brennstoffzelle, aufweist.

18. Reinigungseinrichtung nach Anspruch 17, ***dadurch gekennzeichnet, dass*** der Wasserstoffantrieb (3) mit der Reinigungsmittelabgabeeinrichtung (26) in Verbindung steht.

19. Verfahren zur Verwendung einer Reinigungseinrichtung, nach einem der vorhergehenden Ansprüche, ***dadurch gekennzeichnet, dass*** die Reinigungselemente (6) auf der Längsachse (5) oder parallel zueinander angeordneten Achsen (5, 31) in entgegengesetzten Richtungen bewegt werden.

20. Verfahren nach Anspruch 19, ***dadurch gekennzeichnet, dass*** die Reinigungselemente (6) in einem begrenzten Bereich aneinander vorbei bewegt werden.

21. Verfahren nach Anspruch 19 oder 20, ***dadurch gekennzeichnet, dass*** die Reinigungselemente (6) gemeinsam quer zu der Achse (5) oder den Achsen (5, 31) verschoben werden.

## Claims

1. A cleaning device (1) with a carrier (2), a drive (7), a holder (3) and cleaning elements, the holder (3) having a longitudinal axis (5), on which the cleaning elements (6) are arranged so as to be displaceable with the drive (7) relative to the carrier (2), ***characterized in that*** the cleaning elements (6) can be moved in such a way in opposite directions on the longitudinal axis (5) or on axes (5, 31) arranged parallel to one another that a torque exerted by the cleaning elements about a central axis (18) is minimized thereby.

2. The cleaning device according to claim 1, ***characterized in that*** the carrier (2) is a guide.

3. The cleaning device according to claim 1, ***characterized in that*** the carrier (2) is a copter, in particular a multicopter.

4. The cleaning device according to one of the preceding claims, ***characterized in that*** the drive (7) has a belt (8).

5. The cleaning device according to one of the preceding claims, ***characterized in that*** the holder (3) has a rodding (4).

6. The cleaning device according to claim 5, ***characterized in that* the** rodding (4) has several parallel rods (9, 10), on which the cleaning elements (6) are arranged.

7. The cleaning device according to claim 6, ***characterized in that*** the cleaning elements (6) are arranged so as to be guided with the rods (9, 10) with rollers (11 to 14).

8. The cleaning device according to one of the preceding claims, ***characterized in that*** the longitudinal axis (5) of the holder (3) extends on both sides of the carrier (2).

9. The cleaning device according to one of the preceding claims, ***characterized in that*** cleaning elements (6) are arranged on both sides of the carrier (2).

10. The cleaning device according to claim 8 or 9, ***characterized in that*** cleaning elements (6) are arranged on the holder (3) so as to be displaceable from one side (19) of the carrier (2) to the other side (20) thereof.

11. The cleaning device according to one of the preceding claims, ***characterized in that*** at least one cleaning element (6) has a brush (21).

12. The cleaning device according to claim 11, ***characterized in that*** the brush (21) has a front side (24) with bristles (22).

13. The cleaning device according to one of the preceding claims, ***characterized in that*** at least one cleaning element (6, 25) has a cleaning agent dispensing device (26).

14. The cleaning device according to claim 13, ***characterized in that* the** cleaning agent dispensing device (26) has a nozzle (27).

15. The cleaning device according to one of the preceding claims, ***characterized in that*** the holder (3) or at least one cleaning element (6) has a cleaning agent receiving device (28).

16. The cleaning device according to claim 15, ***characterized in that*** the cleaning agent receiving device (28) has a suction device.

17. The cleaning device according to one of the preceding claims, ***characterized in that*** the carrier (2) has a hydrogen drive (30), in particular a fuel cell.

18. The cleaning device according to claim 17, ***characterized in that*** the hydrogen drive (3) is connected to the cleaning agent dispensing device (26).

19. A method for using a cleaning device according to one of the preceding claims, ***characterized in that*** the cleaning elements (6) are moved in opposite directions on the longitudinal axis (5) or on axes (5, 31) arranged parallel to one another.

20. The method according to claim 19, ***characterized in that*** the cleaning elements (6) are moved past one another in a limited region.

21. The method according to claim 19 or 20, ***characterized in that*** the cleaning elements (6) are displaced jointly transversely to the axis (5) or the axes (5, 31).

## Revendications

1. Dispositif de nettoyage (1), doté d'un support (2), d'un entraînement (7), d'une fixation (3) et d'éléments de nettoyage, la fixation (3) comportant un axe longitudinal (5), sur lequel les éléments de nettoyage (6) sont placés avec l'entraînement (7) en étant coulissants par rapport au support (2), ***caractérisé en ce que*** les éléments de nettoyage (6) peuvent être déplacés dans des directions opposées sur l'axe longitudinal (5) ou sur des axes (5, 31) placés à la parallèle les uns des autres, de sorte à minimiser un couple de rotation exercé par les éléments de nettoyage autour d'un axe médian (18).

2. Dispositif de nettoyage selon la revendication 1, ***caractérisé en ce que*** le support (2) est un guidage.

3. Dispositif de nettoyage selon la revendication 1, ***caractérisé en ce que* le** support (2) est un rotor, notamment un multirotor.

4. Dispositif de nettoyage selon l'une quelconque des revendications précédentes, ***caractérisé en ce que*** l'entraînement (7) est une courroie (8).

5. Dispositif de nettoyage selon l'une quelconque des revendications précédentes, ***caractérisé en ce que*** la fixation (3) est une tringle (4).

6. Dispositif de nettoyage selon la revendication 5, ***caractérisé en ce que* la** tringle (4) comporte plusieurs barres (9, 10) parallèles sur lesquelles sont placés les éléments de nettoyage (6).

7. Dispositif de nettoyage selon la revendication 6, ***caractérisé en ce que*** les éléments de nettoyage (6) avec les barres (9, 10) sont placés en étant guidés avec des galets (11 à 14).

8. Dispositif de nettoyage selon l'une quelconque des revendications précédentes, ***caractérisé en ce que*** l'axe longitudinal (5) de la fixation (3) s'étend de part et d'autre du support (2).

9. Dispositif de nettoyage selon l'une quelconque des revendications précédentes, ***caractérisé en ce que*** de part et d'autre du support (2) sont placés des éléments de nettoyage (6).

10. Dispositif de nettoyage selon la revendication 8 ou 9, ***caractérisé en ce que*** des éléments de nettoyage (6) sont placés sur la fixation (3) en étant coulissants d'un côté (19) du support (2) vers son autre côté (20).

11. Dispositif de nettoyage selon l'une quelconque des revendications précédentes, ***caractérisé en ce qu**'au* moins un élément de nettoyage (6) comporte une brosse (21).

12. Dispositif de nettoyage selon la revendication 11, ***caractérisé en ce que** la* brosse (21) comporte une face avant (24) dotée de poils (22).

13. Dispositif de nettoyage selon l'une quelconque des revendications précédentes, ***caractérisé en ce** q**u'**au* moins un élément de nettoyage (6, 25) comporte un dispositif distributeur (26) de détergent.

14. Dispositif de nettoyage selon la revendication 13, ***caractérisé en ce que*** le dispositif distributeur (26) de détergent comporte une buse (27).

15. Dispositif de nettoyage selon l'une quelconque des revendications précédentes, ***caractérisé en ce que*** la fixation (3) ou au moins un élément de nettoyage (6) comporte un dispositif récepteur (28) de détergent.

16. Dispositif de nettoyage selon la revendication 15, ***caractérisé en ce que*** le dispositif récepteur (28) de détergent comporte un dispositif d'aspiration.

17. Dispositif de nettoyage selon l'une quelconque des revendications précédentes, ***caractérisé en ce que* le** support (2) comporte un entraînement à hydrogène (30), notamment une cellule à combustible.

18. Dispositif de nettoyage selon la revendication 17, ***caractérisé en ce que*** l'entraînement à hydrogène (3) est en liaison avec le dispositif distributeur (26) de détergent.

19. Procédé, destiné à utiliser un dispositif de nettoyage selon l'une quelconque des revendications précédentes, ***caractérisé en ce que*** l'on déplace les éléments de nettoyage (6) sur l'axe longitudinal (5) ou sur des axes (5, 31) placés à la parallèles les uns des autres dans des directions opposées.

20. Procédé selon la revendication 19, ***caractérisé en ce que*** l'on déplace les uns devant les autres les éléments de nettoyage (6) dans une zone limitée.

21. Procédé selon la revendication 19 ou 20, ***caractérisé en ce que*** l'on fait coulisser conjointement les éléments de nettoyage (6) à la transversale de l'axe (5) ou des axes (5, 31).
